# EUROPEAN PATENT SPECIFICATION

(11) **EP 4 009 532 B1**
(45) Date of publication and mention of the grant of the patent: **03.04.2024**
(21) Application number: 20211240.5
(22) Date of filing: 02.12.2020
(51) Int. Cl.: H04B 1/04, H04B 17/14, H04B 17/19, H04B 17/17

(54) **RADIO FREQUENCY SYSTEM AS WELL AS CONTROL SYSTEM**
HOCHFREQUENZSYSTEM UND STEUERUNGSSYSTEM
SYSTÈME RADIOFRÉQUENCE ET SYSTÈME DE CONTRÔLE

(43) Date of publication of application: 08.06.2022
(73) Proprietor: Rohde & Schwarz GmbH & Co. KG, 81671 München (DE)
(72) Inventor: Goeritz, Raimon, 81671 München (DE); Boedecker-Wendt, Sebastian, 81671 München (DE); Schwandt, Guenter, 81671 München (DE)
(74) Representative: Novagraaf Group

(56) References cited:
- JP-A- 2017 098 871
- US-A1- 2003 153 273
- US-A1- 2015 118 980

## Description

The invention relates to a radio frequency system for providing an amplified radio signal as well as a control system for controlling components of a radio frequency system.

In the state of the art, radio frequency systems are known that are inter alia used for electromagnetic compatibility (EMC) tests, particularly electromagnetic interference (EMI) and/or electromagnetic susceptibility (EMS) measurements, and/or field strength tests.

The JP 2017 098871 A shows a transmitter including a characteristic detector, wherein the transmitter comprises a test signal generation means for generating a test signal, a compensation test signal generation means for outputting a compensation test signal on the basis of an amplifier output signal that has been amplified by an amplifier and has been acquired by a distributor, a switch that outputs either the test signal or the compensation test signal to a switch, and measurement means for measuring distortion added at the amplifier on the basis of the test signal and the amplifier output signal.

The US 2015/118980 A1 discloses methods and apparatus for calibrating a transceiver for wireless communications. One of the shown methods generally includes routing an output of a transmitter path to a receiver path, using a first local oscillating signal for the transmitter path, using a second local oscillating signal for the receiver path, and measuring an output of the receiver path as a local oscillator leakage for the transmitter path.

The US 2003/153273 A1 shows a communication controller capable of increasing the capacity of a downlink. A CW length information extracting module-extracts information about the length of the bit stream of a CW (CW length) transmitted over an uplink and notifies it to a reception quality threshold setting module. The longer the notified CW length, the lower quality threshold Qth is set by the reception quality threshold setting module. The quality threshold set by the reception quality threshold setting module is multiplexed and notified with an output signal to be transmitted to a base station.

The radio frequency systems may relate to broadband amplifier systems that comprise a plurality of radio frequency parts, particularly amplifier stages. Accordingly, the radio frequency systems are very complex systems. Hence, it is complicated to correctly set up and maintain the respective radio frequency system. Moreover, the radio frequency system has many different components that may fail, thereby causing a failure of the entire radio frequency system such that the entire radio frequency system is not operable anymore. Then, an operator of the radio frequency system has to identify the faulty component manually, which is time consuming. Afterwards, the faulty component identified has to be replaced and the entire radio frequency system with the new component has to be (recalibrated manually.

Hence, it is complex, time-consuming and expensive to maintain the radio frequency systems known in the state of the art. Moreover, the downtime of the radio frequency system in case of a failure of one component yields high costs since the entire radio frequency system cannot be used until the failure has been identified and the respective component is repaired/replaced.

Accordingly, there is a need for a simple radio frequency system that can be maintained in a more efficient manner.

The invention provides a radio frequency system that comprises a signal generator configured to generate a radio frequency signal as well as an amplifier. The amplifier has at least one amplifier stage connected to the signal generator. A measurement coupler and a radio frequency output. The amplifier stage comprises at least one pre-amplifier, at least one local oscillator as well as at least one switch that is located between the local oscillator and the pre-amplifier. The switch has a first switching position and a second switching position, wherein the switch is configured to forward the radio frequency signal of the signal generator in the first switching position, and wherein the switch is configured to forward a local oscillator signal of the local oscillator in the second switching position. The radio frequency system further comprises at least one detector, wherein the at least one detector is arranged between the signal generator and the switch and/or wherein the at least one detector is arranged between the switch and the pre- amplifier.

The invention is based on the finding that the respective amplifier stage has its own local oscillator, namely an integrated signal source, that can be used to perform tests on components of the amplifier, particularly the respective amplifier stage. For this purpose, the amplifier stage also comprises the switch that has at least two different switching positions, enabling the switch to forward either the local oscillator signal in a testing mode or the radio frequency signal of the signal generator in an operational mode, which depends on the respective switching position of the switch. Hence, any component downstream of the local oscillator, particularly downstream of the pre-amplifier, can be tested by providing the local oscillator signal and controlling the respective switch such that the switch takes the second switching position in which a signal-transmitting connection is established between the local oscillator and the pre-amplifier; as well as any subsequent component downstream of the pre-amplifier.

Accordingly, the internal signal source, namely the local oscillator of the amplifier stage, may be connected to the other components of the amplifier stage via the switch for testing purposes if the switch is in its second switching position that is associated with the testing mode of the radio frequency system.

By testing the components of the amplifier stage, it is possible to identify an error in the radio frequency system such that the error can be localized easily.

Moreover, the testing mode may also be used to identify settings of the radio frequency system for the operational mode or to gather calibration/configuration data to be applied in the operational mode.

Put differently, the local oscillator can be used for self-calibrating purposes of the respective amplifier stage, particularly the entire radio frequency system. For instance, a self-calibration takes place after a certain component has been replaced. Particularly, a new amplifier stage may be included that replaces a fault one. Then, the local oscillator integrated can be used to self-calibrate the radio frequency system having the newly incorporated amplifier stage.

The measurement coupler and/or the detector gather(s) respective data, namely measurement values, which are used to determine the settings of the radio frequency system and/or the calibration/configuration data.

For instance, the measurement coupler is enabled to inter alia measure an output power of the radio frequency system, particularly the respective amplifier stage. The measurement coupler may be part of the amplifier stage such that the output power of the amplifier stage is measured. Alternatively, the measurement coupler may be assigned to the radio frequency output of the radio frequency system, particularly located (directly) upstream of the radio frequency output, such that the output power of the radio frequency signal forwarded to the radio frequency output is measured.

The measurement coupler may relate to a directional coupler that is configured to measure the power of forward waves and/or the power of reverse waves traveling through the measurement coupler. Therefore, the measurement coupler can be used to measure reflection and/or transmission characteristics.

In addition, the detector located upstream of the pre-amplifier, particularly between the switch and the pre-amplifier or between the signal generator and the switch, may be used to determine together with the signal generator an input attenuation of the radio frequency system.

The input attenuation determined can be used to correct the measurement values gathered by means of the measurement coupler, for instance the respective output power. In fact, the occurring input attenuation is considered in order to determine the real amplification of the radio frequency system, particularly the respective amplifier stage, when also taking the output power into account that was measured by the measurement coupler.

The at least one switch is configured to forward either the radio frequency signal of the signal generator or the local oscillator signal of the local oscillator to the pre-amplifier. Thus, the switch has only two different switching positions. The switch has to be in one of the two different switching positions, namely the first switching position or the second switching position. Thus, the switch is only enabled to forward either the radio frequency signal or the local oscillator signal to the pre-amplifier.

The at least one amplifier stage comprises the at least one detector that may be arranged between an input of the amplifier stage and the switch. As mentioned above, the at least one detector may alternatively be arranged between the switch and the pre-amplifier. In any case, the detector is part of the amplifier stage, as it is located between the input of the amplifier stage and the pre-amplifier such that the detector is enabled to detect or rather measure the input attenuation of the radio frequency system, particularly the respective amplifier stage. Hence, losses caused, for instance by cables, can be identified by means of the detector.

Generally, the respective tests can be performed automatically, particularly without any manual interaction.

Moreover, the radio frequency system provided can be established as a plug and play radio frequency system since the local oscillator and/or the switch may be controlled such that the radio frequency system is enabled to test itself and/or to configure itself appropriately. Hence, a faulty component can be identified automatically. Then, the faulty component can be replaced by a new one. The respective settings for the newly incorporated component or rather the entire radio frequency system due to the newly incorporated component can be determined (automatically) by performing the respective tests. Particularly, a self-calibration can be performed.

The local oscillator integrated within the amplifier stage, particularly located in front of the pre-amplifier, may relate to a simple radio frequency signal source. As mentioned above, the local oscillator may be used for calibrating and/or testing the components of the respective amplifier stage, particularly the ones located downstream of the pre-amplifier.

In fact, the radio frequency system provides a dynamic allocation as well as a self-test functionality due to the local oscillator together with the associated switch.

The at least one amplifier stage may comprise an amplifier module that is located downstream of the pre-amplifier. The amplifier stage may comprise at least one pre-amplifier as well as at least one subsequent amplifier module, which together ensure appropriate amplification of the radio frequency signal provided by the signal generator. Generally, the amplifier stage may comprise several amplifier modules that are located downstream of the pre-amplifier. The several amplifier modules may be connected in parallel.

According to an embodiment, an attenuator is provided between the pre-amplifier and the amplifier module. The attenuator may be used to attenuate the respective signal received, particularly partly. Generally, the signal to be attenuated by the attenuator relates to the signal that has been pre-amplified by means of the pre-amplifier previously. For instance, the attenuator diverts and dissipates a portion of the power of the pre-amplifier. In fact, the attenuator is used to provide a low distortion of the signal processed.

In an alternative embodiment, the pre-amplifier comprises at least one attenuator. Hence, the attenuator is integrated within the pre-amplifier, thereby ensuring that a pre-amplified and attenuated signal is forwarded to the amplifier module.

Generally, the attenuator may be configured to be controlled by means of a control unit. The radio frequency system, particularly the attenuator(s) associated to the respective amplifier stage, may be controlled such that the radio frequency system can be calibrated or rather tested accordingly. In fact, certain components of the radio frequency system can be tested according to a certain routine while controlling the attenuator accordingly.

Another aspect provides that the at least one amplifier stage is connected to the signal generator via a first switching unit. The first switching unit ensures that the at least one amplifier stage is enabled to receive the radio frequency signal generated by the signal generator. Hence, the first switching unit is controlled such that the switching units takes a switching position in which a radio frequency connection is established between the signal generator and the at least one amplifier stage.

For instance, the radio frequency system may comprise two or more amplifier stages, wherein the two or more amplifier stages are connected to the signal generator via the first switching unit. The first switching unit may have different switching positions, wherein each of the different switching positions ensures that the signal generator is connected only to one of the several amplifier stages. Depending on the switching position of the first switching unit, a dedicated of the several amplifier stages receives the radio frequency signal generated such that the radio frequency signal is forwarded to the respective amplifier stage for being amplified by this amplifier stage accordingly.

Each of the several amplifier stages may relate to a certain frequency range, thereby establishing the broadband radio frequency system that ensures amplifying broadband signals.

Alternatively or additionally, each of the several amplifier stages may relate to a certain amplification.

Generally, the two or more amplifier stages may relate to a common amplifier. Alternatively, two amplifiers are provided that each comprise at least one amplifier stage.

For instance, the radio frequency system comprises two or more amplifiers, wherein each amplifier has at least one amplifier stage having at least one pre-amplifier, at least one local oscillator as well as at least one switch.

Further, the amplifier stages may be established differently. Particularly, the amplifier stages comprise a different number of amplifier modules located downstream of the respective pre-amplifier. Each of the different amplifier stages provides a different characteristic of the entire radio frequency system, particularly the broadband amplifier system, such as a different amplification and/or frequency range. The radio frequency system is enabled to select the respective amplifier stage to be used for amplifying the radio frequency signal generated by means of the signal generator while setting the first switching unit appropriately.

In addition, the radio frequency system is generally enabled to self-test the respective amplifier stages by using the local oscillator and the respective switch. Accordingly, a faulty component of the amplifier stage or rather the amplifier can be identified during the self-test. The faulty amplifier stage or amplifier can be taken out of operation, for instance automatically by controlling the switch(es) and/or switching unit accordingly. Then, an operator is enabled to remove the respective amplifier stage or amplifier while replacing the fault one with a new one having the same components. After the new amplifier stage or amplifier has been installed, the radio frequency system can be operated in a self-calibration mode, thereby ensuring that measurement values/data are gathered for setting/calibrating the entire radio frequency system correctly.

During the replacement of the faulty component, particularly the amplifier stage or amplifier, the remaining part of the radio frequency system can still be used. Hence, the total downtime can be reduced accordingly.

For calibration purposes, particularly after installing the new component, the respective amplifier stage may be operated with a reduced power, namely a calibration power, thereby reducing the risk of damage in case of an erroneous installation.

According to another aspect, the amplifier stages are connected to the radio frequency output via a second switching unit. The second switching unit may also have different switching positions, wherein only one of the several amplifier stages is connected with the radio frequency output in a corresponding switching position. Thus, the amplified signal is only forwarded from one of the several amplifiers stages towards the radio frequency output, wherein this depends on the specific switching position of the second switching unit interconnected between the amplifier stages and the radio frequency output.

Each amplifier stage may comprise an own measurement coupler. Particularly, the respective measurement coupler is located downstream of the respective pre-amplifier. The measurement coupler provides data or rather information concerning the respective amplifier stage. This measurement values or rather data/information can be gathered irrespective of the switching position of the second switching unit. Moreover, an influence of the second switching unit can be verified when comparing the measurement values provided by the own measurement coupler of the active amplifier stage and the measurement coupler associated with the radio frequency output, as the measurement couplers are located upstream and downstream of the second switching unit, respectively.

Generally, the data, information or rather measurement values may be gathered in order to be evaluated for testing/calibrating the radio frequency system, namely its components.

Furthermore, the invention provides a control system, wherein the control system comprises at least one control and/or evaluation unit and the radio frequency system as described above. The at least one control and/or evaluation unit is used to control the respective components of the radio frequency system, particularly the switch(es) and/or the switching unit(s). For instance, a testing procedure is performed by the control and/or evaluation unit, thereby generating control signals that are processed accordingly by the components of the radio frequency system. Thus, a certain test routine may be performed which comprises several test steps in a pre-defined order.

Particularly, the control and/or evaluation unit is configured to control the at least one switch and/or one of the switching units. The switch(es) and/or the switching unit(s) are controlled such that a certain one of the several amplifier(s) or rather amplifier stage(s) is activated. The activated amplifier (stage) is used for amplifying the radio frequency signal generated (operational mode) or rather for self-testing respective components by means of the local oscillator signal (testing mode). As mentioned above, a self-testing or self-calibration may take place in the testing mode.

Generally, the control system is enabled to control components of the radio frequency system in order to test and/or calibrate the respective radio frequency system. For this purpose, the control and/or evaluation unit is used to control the individual components of the radio frequency system appropriately, namely the switch(es) and/or switching unit(s) such that a certain amplifier stage is activated, thereby receiving the local oscillator signal or the radio frequency signal, which depends on the switching position of the switch. However, the switch is controlled by the control and/or evaluation unit.

Alternatively or additionally, the control and/or evaluation unit is configured to determine at least one parameter of the radio frequency system. For instance, data gathered by the at least one detector and/or by the at least one measurement coupler is processed by the control and/or evaluation unit in order to determine the at least one parameter of the radio frequency system, particularly a reflection parameter.

Hence, the control and/or evaluation unit is enabled to determine characteristics and/or parameters of the radio frequency system, particularly the respective components, by gathering data and/or information of the radio frequency system, which are evaluated. For instance, the gain of an amplifier stage may be determined when considering the input attenuation together with the output power measured by the measurement coupler. Moreover, reflection characteristics may be determined by means of the control and/or evaluation unit.

Another aspect provides that the control system comprises at least one IO-box that is configured to control the at least one switch and/or one of the switching units based on a control signal issued by the control and/or evaluation unit. Generally, an IO-box may relate to a gateway having several interfaces that are used to control respective components of the radio frequency system, particularly the switch(es) and/or switching unit(s).

The radio frequency output may be configured to be connected with a load and/or an antenna. Depending on the type of termination provided at the radio frequency output, a certain test procedure or rather calibration mode may be enabled for testing or rather calibrating the radio frequency system.

Moreover, the local oscillator, the switch, the pre-amplifier as well as the detector, which are associated to a common amplifier stage, may be integrated within a common module.

The respective module, particularly the local oscillator, may be configured to communicate with other components of the radio frequency system, for instance via a Local Area Network (LAN). Particularly, the IO-box is configured to control the switch(es) and/or switching unit(s) via LAN.

In general, the input attenuation of the radio frequency system can be determined. This information, namely the input attenuation determined, can be used together with the measurement value(s) obtained by the at least one measurement coupler. Hence, an amplification (gain) of the radio frequency system, particularly the active amplifier stage or rather each of the amplifier stages, can be determined. For this purpose, the raw measurement values of the at least one measurement coupler are corrected while considering the input attenuation determined by means of the detector that is located upstream of the pre-amplifier in the respective amplifier stage.

The local oscillator is integrated within the amplifier stage, particularly upstream of the pre-amplifier. In each amplifier stage, the local oscillator is connected to the pre-amplifier via the respective switch such that either the local oscillator signal provided (in the testing mode) or the RF signal provided by the signal generator (operational mode) is forwarded to the pre-amplifier and the subsequent amplifier module(s).

Generally, the respective switching positions of the switch(es) and/or the switching unit(s) can also be determined when operating the local oscillator(s) in the testing mode, thereby identifying the correct settings for the radio frequency system.

The invention also provides a method of self-testing components of a radio frequency system, with the steps of:
- Providing a radio frequency system according to any of claims 1 to 9,
- Connecting a load and/or an antenna with the radio frequency output,
- Generating a local oscillator signal by means of the local oscillator or a radio frequency signal by means of the signal generator,
- Controlling the switch and/or the switching unit, and
- Evaluating measurement data obtained by means of the measurement coupler and/or the detector.

The load and/or antenna is connected with the radio frequency output, thereby ensuring that the radio frequency system is enabled to identify if the radio frequency path encompassing the amplifier stage is switched through. Hence, a self-test of the radio frequency system, particularly its components, can be performed appropriately. The advantages and aspects mentioned above also apply to the method in a similar manner.

Generally, the control and/or evaluation unit may have a memory in which data and/or parameters concerning the radio frequency system are stored such that the control and/or evaluation unit is enabled to determine which amplifier (stage) or rather cable has a defect. The respective results of this self-test, namely the component identified to be faulty, can be outputted as information such that the operator is informed appropriately.

In addition, field sensors may be provided that receive the radio frequency signals outputted by the radio frequency output. Hence, output losses and/or antenna amplification can be identified additionally.

Further aspects and many of the attended advantages of the claimed subject matter will become more readily appreciated as the same become better understood by reference to the following detailed description when taken in conjunction with the accompanying drawings. In the drawings,

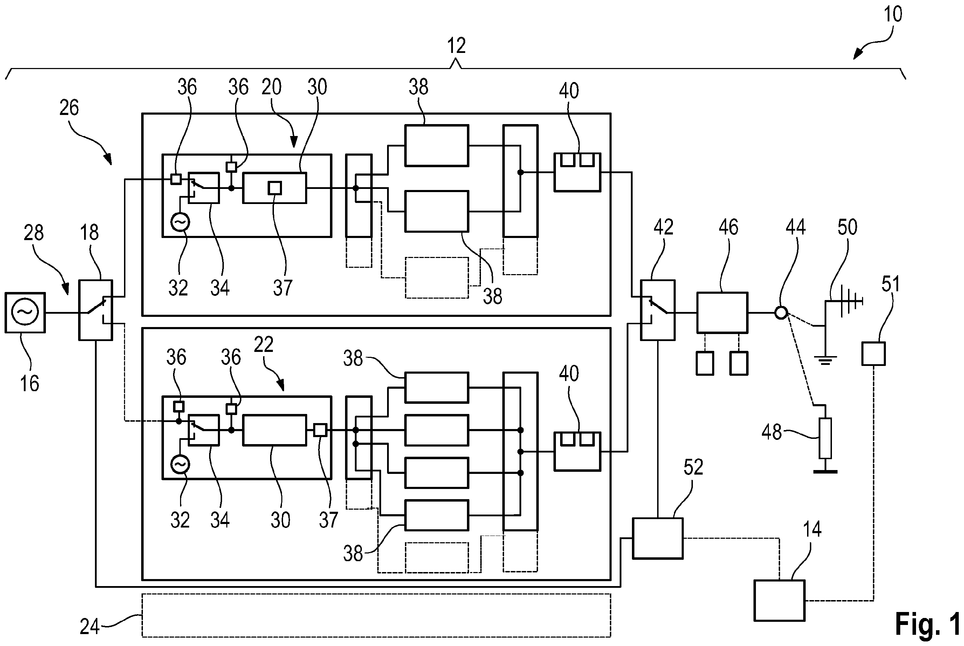

- Figure 1 schematically shows a control system according to the invention that comprises a radio frequency system according to the invention.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

Therein and in the following, the terms "unit" and/or "module" are/is understood to describe suitable hardware, suitable software, or a combination of hardware and software that is configured to have a certain functionality. The hardware may, inter alia, comprise a CPU, a GPU, an FPGA, an ASIC, or other types of electronic circuitry.

In Figure 1 a control system 10 is shown that comprises a radio frequency system 12 as well as at least one control and/or evaluation unit 14 that is schematically shown in Figure 1.

The radio frequency system 12 comprises a signal generator 16 that is configured to generate a radio frequency (RF) signal, which is also called high frequency (HF) signal.

The signal generator 16 is connected with a first switching unit 18 that is connected to a first amplifier stage 20, a second amplifier stage 22, and a third amplifier stage 24 that is only illustrated schematically by dashed lines.

Therefore, the first switching unit 18 has three different switching positions such that the radio frequency signal generated by the signal generator 16 is forward to one of the different amplifier stages 20 to 24.

Each of the amplifier stages 20 to 24 is associated to at least one amplifier 26 that is connected with the signal generator 16. The amplifier 26 may comprise the first switching means 18 such that the amplifier 26 has an input 28 that corresponds to the input of the first switching means 18 via which the signal is received that has been issued by the signal generator 16. Alternatively, two or more amplifiers 26 may be provided that comprise at least one amplifier stage.

Each of the amplifier stages 20 to 24 comprise a pre-amplifier 30 as well as an integrated local oscillator 32 that is connected to the pre-amplifier 30 via a switch 34.

The respective switch 34 ensures that either the radio frequency signal issued by the signal generator 16 or the local oscillator signal issued by the local oscillator 32 is forwarded to the pre-amplifier 30, which depends on the respective switching position of the switch 34.

In addition, a detector 36 is provided in each of the amplifier stages 20 to 24, wherein the at least one detector 36 may be located between the signal generator 16 and the switch 34, particularly an input of the respective amplifier stage 20 to 24 and the respective switch 34. Alternative or additionally, the detector 36 is located between the switch 34 and the pre-amplifier 30.

In the shown embodiment of Figure 1, each amplifier stage 20 to 24 comprises two detectors 36 that are located between the input of the respective amplifier stage 20 to 24 and the switch 34 as well as between the switch 34 and the pre-amplifier 30.

The amplifier stages 20 to 24 may also comprise an attenuator 37 that may be integrated within the respective pre-amplifier 30 as shown for the first amplifier stage 20 or rather located downstream of the pre-amplifier 30 a shown for the second amplifier stage 22.

Further, each of the amplifier stages 20 to 24 comprises at least one amplifier module 38 that is located downstream of the pre-amplifier 30.

As shown in Figure 1, the respective amplifier stages 20 to 24 may be established in a different manner, as they may provide a different number of amplifier modules 38. For instance, the first amplifier stage 20 comprises two amplifier modules 38, whereas the second amplifier stage 22 comprises four amplifier modules 38 in the embodiment shown.

In addition, each of the amplifier stages 20 to 24 comprises an own measurement coupler 40 that is located downstream of the pre-amplifier 30 and the amplifier module(s) 38.

The respective amplifier stages 20 to 24 are connected with a second switching unit 42 that has different switching positions, wherein the second switching unit 42 is also connected with a radio frequency output 44.

In the line between the second switching unit 44 and the radio frequency output 44, another measurement coupler 46 is provided.

Generally, the own measurement coupler 40 as well as the measurement coupler 46 located in the line between the second switch 42 and the radio frequency output 44 each are configured to measure the incident power and the reverse power of signals travelling along the respective line having the dedicated measurement coupler 40, 46.

The radio frequency system 12 also comprises a load 48 and an antenna 50 that may be connected with the radio frequency output 44 for testing purposes.

The radio frequency system 12 may also comprise more than one radio frequency output 44, wherein these radio frequency outputs 44 may be associated to different amplifiers 26. Hence, one amplifier 26 may be terminated by the load 48, for instance a 50 Ω load, whereas the other amplifier 26 may be terminated by the antenna 50.

The control system 10 may also comprise a field sensor 51 that is located in a testing chamber. The field sensor 51 may be used for field strength tests that receive the radio frequency signals outputted by the radio frequency output 44. Hence, output losses and/or antenna amplification can be identified.

In addition, Figure 1 shows that the control system 10 also comprises an IO-box 52 that is connected with the first switching unit 18 and second switching unit 42 in order to control the respective switching units 18, 42.

Accordingly, the radio frequency signal issued by the signal generator 16 is forwarded to a respected amplifier stage 20 to 24 depending on the switching position of the switching unit 18. Moreover, depending on the switching position of the second switching unit 42, the amplified radio frequency signal or rather the local oscillator signal is forwarded to the radio frequency output 44 from a respective amplifier stage 20 to 24.

In addition, the control and/or evaluation unit 14, particularly the IO-box 52 controlled by the control and/or evaluation unit 14, may also control the switches 34 that are directly connected with the local oscillator 32 of each amplifier stage 20 to 24 in order to control whether the respective amplifier stage 20 to 24 processes the radio frequency signal issued by the signal generator 16 or rather the local oscillator signal issued by the corresponding local oscillator 32.

Accordingly, the IO-box 52 controls the respective switch(es) 18 and/or switching unit(s) 18, 42 of the radio frequency system 10 in order to activate a respective amplifier stage 20 - 24 for testing purposes.

The IO-box 52 itself is controlled appropriately by means of the control and/or evaluation unit 14 that may gather information and/or data from the respective measurement couplers 40, 46 and/or the detectors 36.

Furthermore, the control and/or evaluation unit 14 or the IO-box 52 controlled by the control and/or evaluation unit 14 may also control the attenuators 37 of the amplifier stages 20 - 24.

The control and/or evaluation unit 14 may be established by a software running on a processor that is part of a circuitry. For instance, a computing device is used on which the software is running that controls the components of the radio frequency system 12 and/or the IO-box 52.

However, the amplifier 26 itself may also have a control unit that can be used for controlling the respective components of the radio frequency system 12, particularly the switch(es) 34, the switching unit(s) 18, 42 and/or the attenuator(s) 37.

In case of several amplifiers 26 provided by the radio frequency system 12, each of the amplifiers 26 may be used for controlling the respective components. The operator of the radio frequency system 12 may select one of the amplifiers 26 to be used for controlling. Hence, a masterless radio frequency system 12 is established.

The components, for instance the switch(es) 34, the switching unit(s) 18, 42, the attenuator(s) 37, the measurement coupler(s) 40, 46 and/or the control and/or evaluation unit 14, may communicate with each other, for instance via an IP network such as a local area network.

In general, the control system 10, particularly the radio frequency system 12, is enabled to auto test itself by checking and/or verifying the respective components appropriately while controlling the respective switches 36, switching units 18, 42 in an appropriate manner.

For instance, the local oscillator 32 of a respective amplifier stage 20 - 24 generates the local oscillator signal in a certain testing mode. The local oscillator signal is processed by the respective amplifier stage 20 - 24, wherein data/information and/or measurement values are gathered in order to characterize the respective amplifier stage 20 - 24, particularly its components. Alternatively, a radio frequency signal generated by means of the signal generator 16 is used and forwarded to a certain amplifier stage 20 - 24 to be tested.

Depending on the respective tests to be performed the switch(es) 34 and/or switching unit(s) 18, 42 are controlled accordingly.

Afterwards, the measurement data obtained by the measurement coupler(s) 40, 46 and/or the detector 36 is evaluated in order to characterize the respective components, particularly identifying a failure.

However, the respective self-testing can also be done in order to self-calibrate or automatically configure the radio frequency system 12, for instance after a new component has been installed or rather a previous faulty one has been replaced.

Certain embodiments disclosed herein, particularly the respective module(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. A radio frequency system for providing an amplified radio signal, wherein the radio frequency system (12) comprises a signal generator (16) configured to generate a radio frequency signal as well as an amplifier (26),
wherein the amplifier (26) has at least one amplifier stage (20 - 24) connected to the signal generator (16), a measurement coupler (40, 46) and a radio frequency output (44),
wherein the amplifier stage (20 - 24) comprises at least one pre-amplifier (30), at least one local oscillator (32) as well as at least one switch (34) that is located between the local oscillator (32) and the pre-amplifier (30),
wherein the switch (34) has a first switching position and a second switching position, wherein the switch (34) is configured to forward the radio frequency signal of the signal generator (16) in the first switching position, wherein the switch (34) is configured to forward a local oscillator signal of the local oscillator (32) in the second switching position,
wherein the switch (34) is configured to forward either the radio frequency signal of the signal generator (16) or the local oscillator signal of the local oscillator (32) to the pre-amplifier (30), and
wherein the radio frequency system (12) comprises at least one detector (36), wherein the at least one detector (36) is arranged between the signal generator (16) and the switch (34) and/or wherein the at least one detector (36) is arranged between the switch (34) and the pre-amplifier (30).

2. The radio frequency system according to claim 1, wherein the at least one amplifier stage (20 - 24) comprises an amplifier module (38) that is located downstream of the pre-amplifier (30).

3. The radio frequency system according to any of the preceding claims, wherein an attenuator (37) is provided between the pre-amplifier (30) and the amplifier module (38) and/or wherein the pre-amplifier (30) comprises at least one attenuator.

4. The radio frequency system according to claim 3, wherein the attenuator (37) is configured to be controlled by means of a control unit (14).

5. The radio frequency system according to any of the preceding claims, wherein the at least one amplifier stage (20 - 24) is connected to the signal generator (16) via a first switching unit (18).

6. The radio frequency system according to any of the preceding claims, wherein the radio frequency system (12) comprises two or more amplifier stages (20 - 24), and wherein the two or more amplifier stages (20 - 24) are connected to the signal generator (16) via the first switching unit (18).

7. The radio frequency system according to claim 6, wherein the amplifier stages (20 - 24) are established differently, in particular wherein the amplifier stages (20 - 24) comprise a different number of amplifier modules (38) located downstream of the respective pre-amplifier (30).

8. The radio frequency system according to claim 6 or 7, wherein the amplifier stages (20 - 24) are connected to the radio frequency output (44) via a second switching unit (42).

9. The radio frequency system according to any of claims 6 to 8, wherein each amplifier stage (20 - 24) comprises an own measurement coupler (40), in particular wherein the respective measurement coupler (40) is located downstream of the respective pre-amplifier (30).

10. A control system for controlling components of a radio frequency system (12) wherein the control system (10) comprises at least one control and/or evaluation unit (14) and the radio frequency system (12) according to any of the preceding claims.

11. The control system according to claim 10, wherein the control and/or evaluation unit (14) is configured to control the at least one switch (34) and/or one of the switching units (18, 42) and/or wherein the control and/or evaluation unit (14) is configured to determine at least one parameter of the radio frequency system (12), for instance by evaluating data gathered by the at least one detector (36) and/or by the measurement coupler (40, 46).

12. The control system according to claim 10 or 11, wherein the control system (10) comprises at least one IO-box (52) that is configured to control the at least one switch (34) and/or one of the switching units (18, 42) based on a control signal issued by the control and/or evaluation unit (14).

13. The control system according to any of claims 10 to 12, wherein the radio frequency output (44) is configured to be connected with a load (48) and/or an antenna (50).

14. A method of self-testing components of a radio frequency system (12), with the steps of:
- Providing a radio frequency system (12) according to any of claims 1 to 9,
- Connecting a load (48) and/or an antenna (50) with the radio frequency output (44),
- Generating a local oscillator signal by means of the local oscillator (32) or a radio frequency signal by means of the signal generator (16),
- Controlling the switch (34) and/or the switching unit (18, 42), and
Evaluating measurement data obtained by means of the measurement coupler (40, 46) and/or the detector (36).

## Patentansprüche

1. Hochfrequenzsystem zum Bereitstellen eines verstärkten Funksignals, wobei das Hochfrequenzsystem (12) einen Signalgenerator (16) umfasst, der konfiguriert ist, um ein Hochfrequenzsignal sowie einen Verstärker (26) zu erzeugen,
wobei der Verstärker (26) mindestens eine Verstärkerstufe (20 - 24), die mit dem Signalgenerator (16) verbunden ist, einen Messkoppler (40, 46) und einen Hochfrequenzausgang (44) aufweist,
wobei die Verstärkerstufe (20 - 24) mindestens einen Vorverstärker (30), mindestens einen lokalen Oszillator (32) sowie mindestens einen Schalter (34) umfasst, der sich zwischen dem lokalen Oszillator (32) und dem Vorverstärker (30) befindet,
wobei der Schalter (34) eine erste Schaltposition und eine zweite Schaltposition aufweist, wobei der Schalter (34) konfiguriert ist, um das Hochfrequenzsignal des Signalgenerators (16) in der ersten Schaltposition weiterzuleiten, wobei der Schalter (34) konfiguriert ist, um ein lokales Oszillatorsignal des lokalen Oszillators (32) in der zweiten Schaltposition weiterzuleiten,
wobei der Schalter (34) konfiguriert ist, um entweder das Hochfrequenzsignal des Signalgenerators (16) oder das lokale Oszillatorsignal des lokalen Oszillators (32) an den Vorverstärker (30) weiterzuleiten und
wobei das Hochfrequenzsystem (12) mindestens einen Detektor (36) umfasst, wobei der mindestens eine Detektor (36) zwischen dem Signalgenerator (16) und dem Schalter (34) angeordnet ist und/oder wobei der mindestens eine Detektor (36) zwischen dem Schalter (34) und dem Vorverstärker (30) angeordnet ist.

2. Hochfrequenzsystem nach Anspruch 1, wobei die mindestens eine Verstärkerstufe (20 - 24) ein Verstärkermodul (38) umfasst, das dem Vorverstärker (30) nachgelagert angeordnet ist.

3. Hochfrequenzsystem nach einem der vorstehenden Ansprüche, wobei ein Abschwächer (37) zwischen dem Vorverstärker (30) und dem Verstärkermodul (38) bereitgestellt ist und/oder wobei der Vorverstärker (30) mindestens einen Abschwächer umfasst.

4. Hochfrequenzsystem nach Anspruch 3, wobei der Abschwächer (37) konfiguriert ist, um mittels einer Steuereinheit (14) gesteuert zu werden.

5. Hochfrequenzsystem nach einem der vorstehenden Ansprüche, wobei die mindestens eine Verstärkerstufe (20 - 24) mit dem Signalgenerator (16) über eine erste Schalteinheit (18) verbunden ist.

6. Hochfrequenzsystem nach einem der vorstehenden Ansprüche, wobei das Hochfrequenzsystem (12) zwei oder mehr Verstärkerstufen (20 - 24) umfasst und wobei die zwei oder mehr Verstärkerstufen (20 - 24) mit dem Signalgenerator (16) über die erste Schalteinheit (18) verbunden sind.

7. Hochfrequenzsystem nach Anspruch 6, wobei die Verstärkerstufen (20 - 24) unterschiedlich eingerichtet sind, insbesondere wobei die Verstärkerstufen (20 - 24) eine unterschiedliche Anzahl von Verstärkermodulen (38) umfassen, die dem jeweiligen Vorverstärker (30) nachgelagert angeordnet sind.

8. Hochfrequenzsystem nach Anspruch 6 oder 7, wobei die Verstärkerstufen (20 - 24) mit dem Hochfrequenzausgang (44) über eine zweite Schalteinheit (42) verbunden sind.

9. Hochfrequenzsystem nach einem der Ansprüche 6 bis 8, wobei jede Verstärkerstufe (20 - 24) einen eigenen Messkoppler (40) umfasst, insbesondere wobei der jeweilige Messkoppler (40) dem jeweiligen Vorverstärker (30) nachgelagert angeordnet ist.

10. Steuersystem zum Steuern von Komponenten eines Hochfrequenzsystems (12), wobei das Steuersystem (10) mindestens eine Steuer- und/oder Auswerteeinheit (14) und das Hochfrequenzsystem (12) nach einem der vorstehenden Ansprüche umfasst.

11. Steuersystem nach Anspruch 10, wobei die Steuer- und/oder Auswerteeinheit (14) konfiguriert ist, um den mindestens einen Schalter (34) und/oder eine der Schalteinheiten (18, 42) zu steuern und/oder wobei die Steuer- und/oder Auswerteeinheit (14) konfiguriert ist, um mindestens einen Parameter des Hochfrequenzsystems (12) zu bestimmen, beispielsweise durch das Auswerten von Daten, die durch den mindestens einen Detektor (36) und/oder durch den Messkoppler (40, 46) gesammelt werden.

12. Steuersystem nach Anspruch 10 oder 11, wobei das Steuersystem (10) mindestens eine IO-Box (52) umfasst, die konfiguriert ist, um den mindestens einen Schalter (34) und/oder eine der Schalteinheiten (18, 42) basierend auf einem Steuersignal zu steuern, das durch die Steuer- und/oder Auswerteeinheit (14) ausgegeben wird.

13. Steuersystem nach einem der Ansprüche 10 bis 12, wobei der Hochfrequenzausgang (44) konfiguriert ist, um mit einer Last (48) und/oder einer Antenne (50) verbunden zu werden.

14. Verfahren zum Selbsttesten von Komponenten eines Hochfrequenzsystems (12) mit den Schritten:
- Bereitstellen eines Hochfrequenzsystems (12) nach einem der Ansprüche 1 bis 9,
- Verbinden einer Last (48) und/oder einer Antenne (50) mit dem Hochfrequenzausgang (44),
- Erzeugen eines lokalen Oszillatorsignals mittels des lokalen Oszillators (32) oder eines Hochfrequenzsignals mittels des Signalgenerators (16),
- Steuern des Schalters (34) und/oder der Schalteinheit (18, 42) und
Auswerten von Messdaten, die mittels des Messkopplers (40, 46) und/oder des Detektors (36) erhalten werden.

## Revendications

1. Système de radiofréquence destiné à fournir un signal radio amplifié, dans lequel le système de radiofréquence (12) comprend un générateur de signal (16) configuré pour générer un signal de radiofréquence ainsi qu'un amplificateur (26),
dans lequel l'amplificateur (26) a au moins un étage amplificateur (20-24) connecté au générateur de signal (16), un coupleur de mesure (40, 46) et une sortie radiofréquence (44),
dans lequel l'étage amplificateur (20-24) comprend au moins un préamplificateur (30), au moins un oscillateur local (32) ainsi qu'au moins un commutateur (34) qui est situé entre l'oscillateur local (32) et le préamplificateur (30),
dans lequel le commutateur (34) a une première position de commutation et une seconde position de commutation, dans lequel le commutateur (34) est configuré pour acheminer le signal de radiofréquence du générateur de signal (16) dans la première position de commutation, dans lequel le commutateur (34) est configuré pour acheminer un signal d'oscillateur local de l'oscillateur local (32) dans la seconde position de commutation,
dans lequel le commutateur (34) est configuré pour acheminer soit le signal de radiofréquence du générateur de signal (16) soit le signal d'oscillateur local de l'oscillateur local (32) au préamplificateur (30), et
dans lequel le système de radiofréquence (12) comprend au moins un détecteur (36), dans lequel l'au moins un détecteur (36) est agencé entre le générateur de signal (16) et le commutateur (34) et/ou dans lequel l'au moins un détecteur (36) est agencé entre le commutateur (34) et le préamplificateur (30).

2. Système de radiofréquence selon la revendication 1, dans lequel l'au moins un étage amplificateur (20-24) comprend un module amplificateur (38) qui est situé en aval du préamplificateur (30).

3. Système radiofréquence selon l'une quelconque des revendications précédentes, dans lequel un atténuateur (37) est fourni entre le préamplificateur (30) et le module amplificateur (38) et/ou dans lequel le préamplificateur (30) comprend au moins un atténuateur.

4. Système de radiofréquence selon la revendication 3, dans lequel l'atténuateur (37) est configuré pour être commandé au moyen d'une unité de commande (14).

5. Système de radiofréquence selon l'une quelconque des revendications précédentes, dans lequel l'au moins un étage amplificateur (20-24) est connecté au générateur de signal (16) par l'intermédiaire d'une première unité de commutation (18).

6. Système de radiofréquence selon l'une quelconque des revendications précédentes, dans lequel le système de radiofréquence (12) comprend deux ou plusieurs étages amplificateurs (20-24), et dans lequel les deux ou plusieurs étages amplificateurs (20-24) sont connectés au générateur de signal (16) par l'intermédiaire de la première unité de commutation (18).

7. Système de radiofréquence selon la revendication 6, dans lequel les étages amplificateurs (20-24) sont établis différemment, en particulier dans lequel les étages amplificateurs (20-24) comprennent un nombre différent de modules amplificateurs (38) situés en aval de l'amplificateur respectif (30).

8. Système de radiofréquence selon la revendication 6 ou 7, dans lequel les étages amplificateurs (20-24) sont connectés à la sortie radiofréquence (44) par l'intermédiaire d'une seconde unité de commutation (42).

9. Système de radiofréquence selon l'une quelconque des revendications 6 à 8, dans lequel chaque étage amplificateur (20-24) comprend un propre coupleur de mesure (40), en particulier dans lequel le coupleur de mesure (40) respectif est situé en aval de l'amplificateur respectif (30).

10. Système de commande permettant de commander des composants d'un système de radiofréquence (12) dans lequel le système de commande (10) comprend au moins une unité de commande et/ou d'évaluation (14) et le système de radiofréquence (12) selon l'une quelconque des revendications précédentes.

11. Système de commande selon la revendication 10, dans lequel l'unité de commande et/ou d'évaluation (14) est configurée pour commander l'au moins un commutateur (34) et/ou l'une des unités de commutation (18, 42) et/ou dans lequel l'unité de commande et/ou d'évaluation (14) est configurée pour déterminer au moins un paramètre du système de radiofréquence (12), par exemple en évaluant des données recueillies par l'au moins un détecteur (36) et/ou par le coupleur de mesure (40, 46).

12. Système de commande selon la revendication 10 ou 11, dans lequel le système de commande (10) comprend au moins un boîtier IO (52) qui est configuré pour commander l'au moins un commutateur (34) et/ou l'une des unités de commutation (18, 42) en fonction d'un signal de commande émis par l'unité de commande et/ou d'évaluation (14).

13. Système de commande selon l'une quelconque des revendications 10 à 12, dans lequel la sortie radiofréquence (44) est configurée pour être connectée à une charge (48) et/ou à une antenne (50).

14. Procédé d'auto-test de composants d'un système radiofréquence (12), avec les étapes consistant à :
- la fourniture d'un système de radiofréquence (12) selon l'une quelconque des revendications 1 à 9,
- la connexion d'une charge (48) et/ou d'une antenne (50) avec la sortie radiofréquence (44),
- la génération d'un signal d'oscillateur local au moyen de l'oscillateur local (32) ou d'un signal radiofréquence au moyen du générateur de signal (16),
- la commande du commutateur (34) et/ou de l'unité de commutation (18, 42), et
l'évaluation de données de mesure obtenues au moyen du coupleur de mesure (40, 46) et/ou du détecteur (36).
